# EUROPEAN PATENT APPLICATION

(11) **EP 2 067 558 A1**
(43) Date of publication of application: **10.06.2009**
(21) Application number: 08168796.4
(22) Date of filing: 11.11.2008
(51) Int. Cl.: B23D 63/16

(54) **Device for sharpening flexible cutting elements, particularly cutting chains of chainsaws and the like**

(30) Priority: 05.12.2007 IT MI20072284
(71) Applicant: Berni, Nicola, 42045 Luzzara RE (IT)
(72) Inventor: Berni, Nicola, 42045 Luzzara RE (IT)
(74) Representative: Modiano, Micaela Nadia

(57) **Abstract**

A device for sharpening flexible cutting elements, particularly cutting chains of chainsaws and the like, comprising a frame (2) for supporting a sharpening head (3), the device further comprising means for mutual fixing between the supporting frame (2) and a blade (10) for guiding a flexible cutting element (11), means for the stepwise advancement of the flexible cutting element (11) being further provided and being actuated by a sharpening head (3) in passing from an inactive position to an active position and vice versa.

## Description

The present invention relates to a device for sharpening flexible cutting elements, particularly cutting chains of chainsaws and the like.

As is known, several types of tools that use flexible cutting elements, such as for example chainsaws, band saws and so forth, are commercially available.

In such tools, in order to sharpen the flexible cutting element, first of all the flexible cutting element is removed from the tool and then variously shaped devices are used which allow to produce the stepwise advancement of the cutting element so as to position the sharpening head at the element to be sharpened.

Known types of solutions, which are used typically for portable sharpening devices, suffer the severe drawback of requiring the disassembly of the flexible cutting element in order to sharpen it, with the consequent associated difficulties and with long operating times.

The aim of the invention is to eliminate the drawbacks cited above, by providing a device for sharpening flexible cutting elements, particularly cutting chains of chainsaws and the like, that allows to simplify considerably all sharpening operations, having always also the assurance of correct positioning of the flexible cutting element to be sharpened.

Within this aim, an object of the invention is to provide a device for sharpening flexible cutting elements that allows to reduce drastically the time needed to sharpen a flexible cutting element, such as for example a cutting chain of chainsaws, while having the assurance of providing precise processing.

Another object of the present invention is to provide a device for sharpening flexible cutting elements, particularly cutting chains of chainsaws and the like, that thanks to its particular constructive characteristics is capable of giving the greatest assurances of reliability and safety in use.

Still another object of the present invention is to provide a device that can be obtained easily starting from commonly commercially available elements and materials and is also competitive from a merely economical standpoint.

This aim and these and other objects that will become better apparent hereinafter are achieved by a device for sharpening flexible cutting elements, particularly cutting chains of chainsaws and the like, comprising a frame for supporting a sharpening head, characterized in that it comprises means for mutual fixing between said supporting frame and a blade for guiding a flexible cutting element, means for the stepwise advancement of said flexible cutting element being further provided which are actuated by said sharpening head in passing from the inactive position to the active position and vice versa.

Further characteristics and advantages of the present invention will become better apparent from the description of a preferred but not exclusive embodiment of a device for sharpening flexible cutting elements, particularly cutting chains of chainsaws and the like, illustrated by way of non-limiting example in the accompanying drawings, wherein:

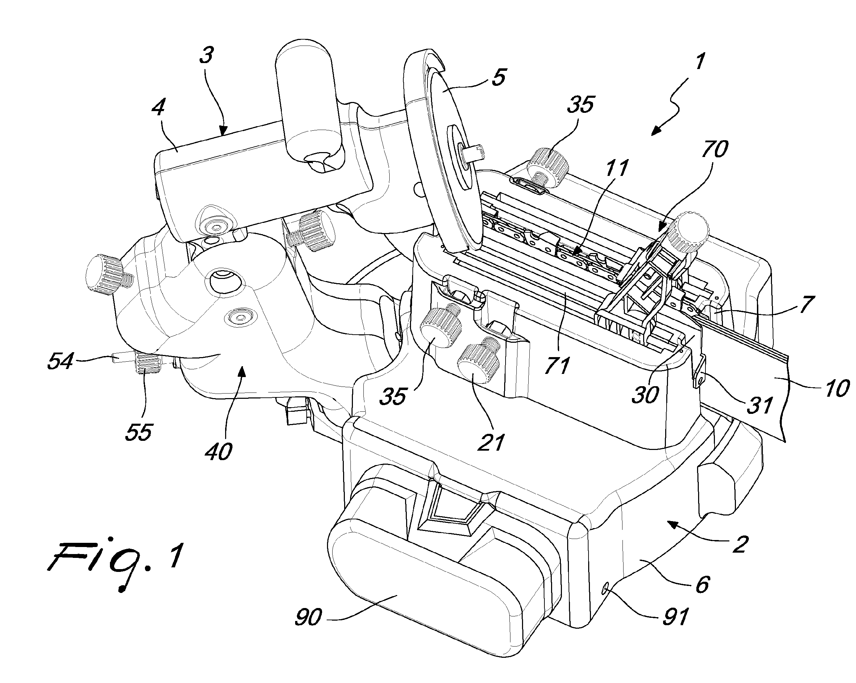

Figure 1 is a schematic perspective view of the sharpening device according to the invention, connected to a guiding blade of a chainsaw;

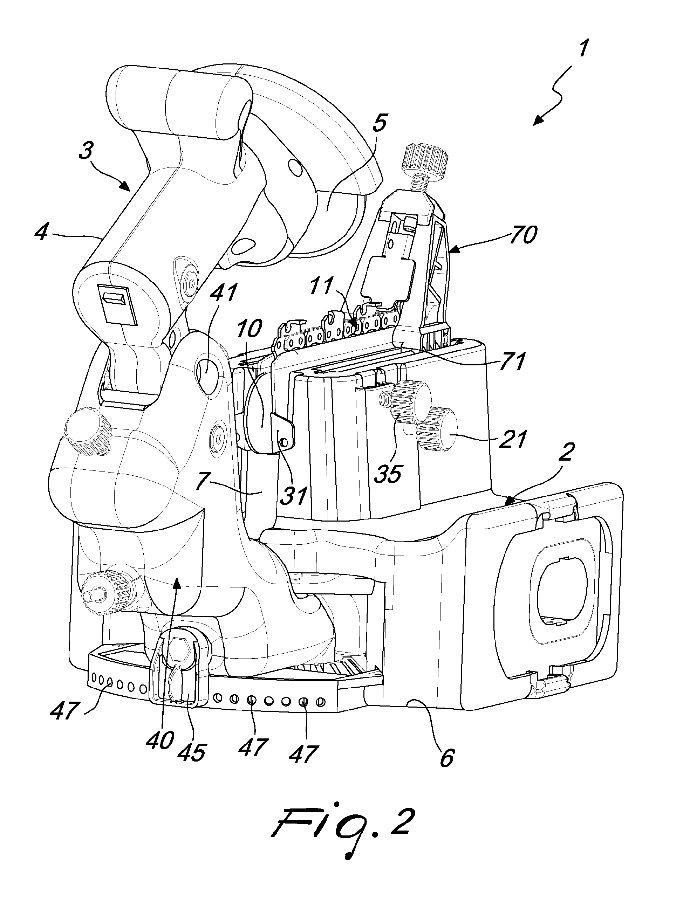

Figure 2 is a perspective view of the device from the opposite side;

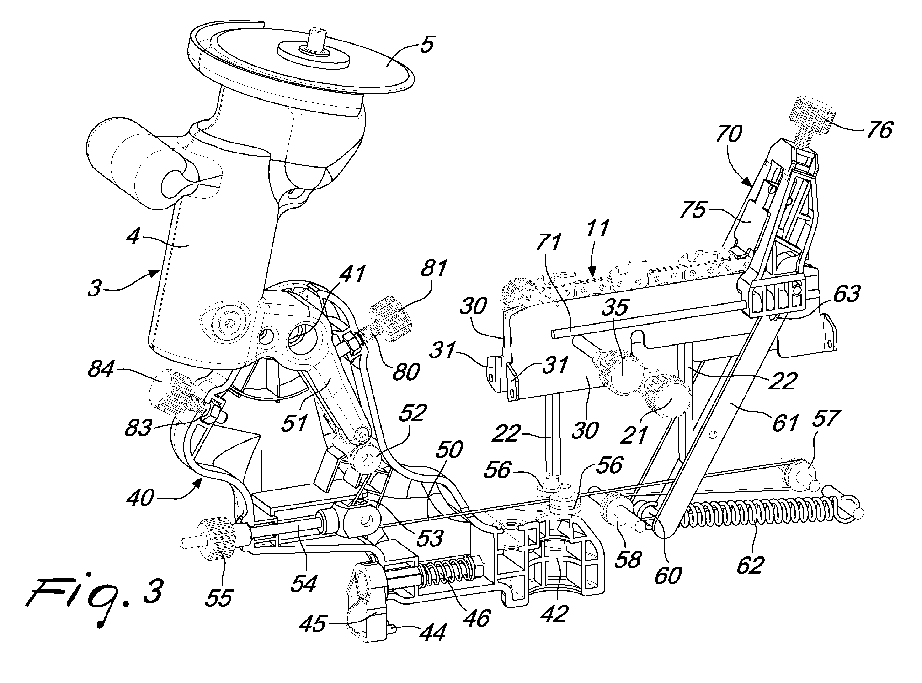

Figure 3 is a view of the detail of the stepwise advancement means of the flexible cutting element;

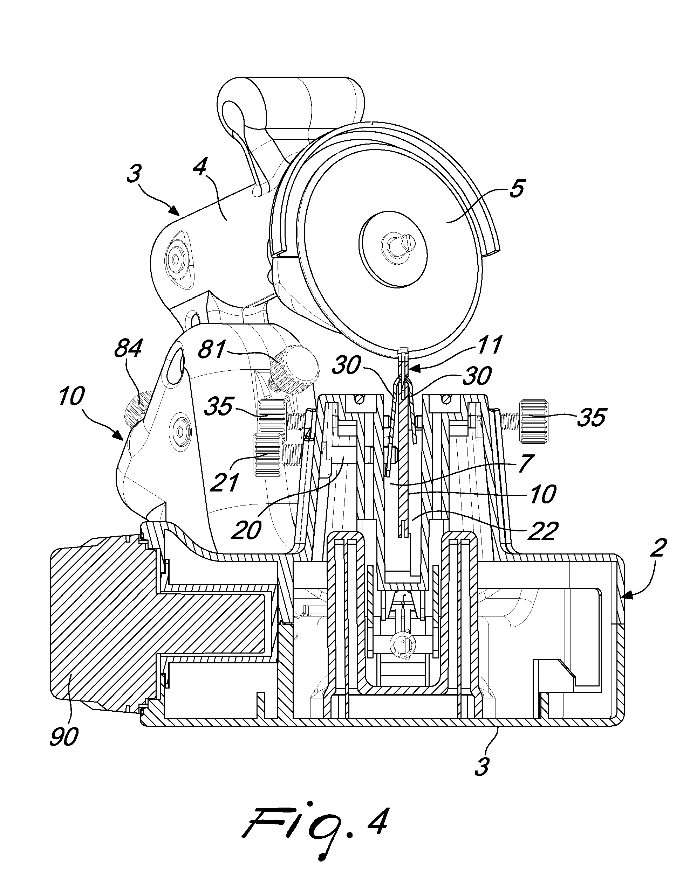

Figure 4 is a transverse sectional view of the device;

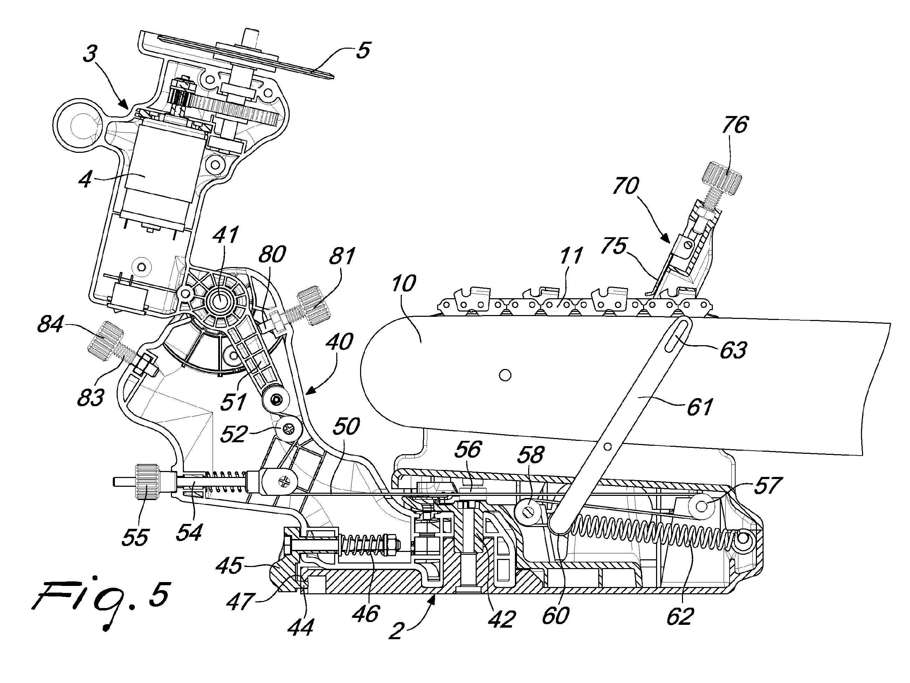

Figure 5 is a longitudinal sectional view of the device;

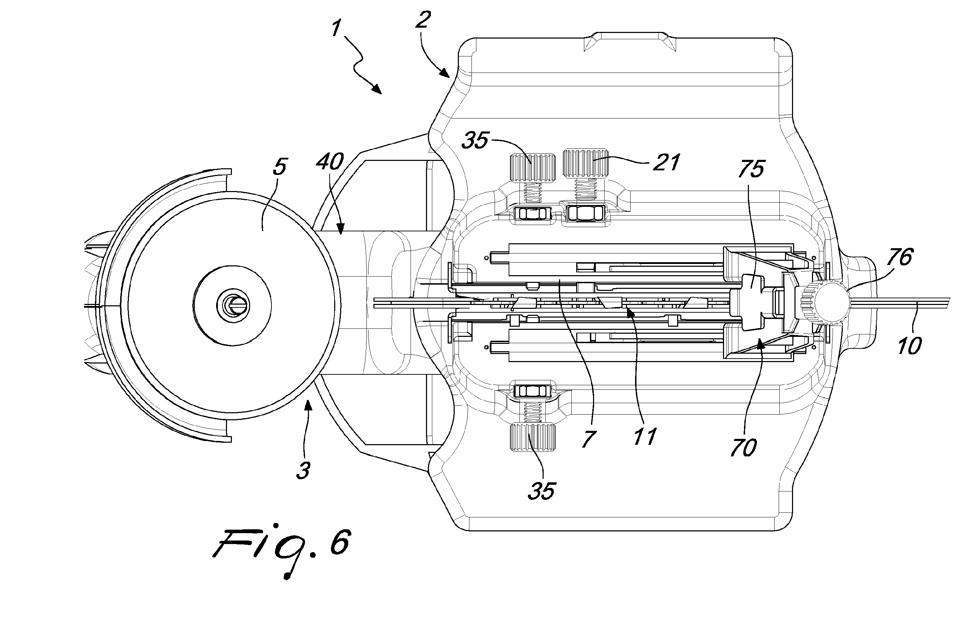

Figure 6 is a top plan view of the device, connected to a guiding blade.
Figures 7 and 8 are perspective views of a further embodiment of the sharpening device according to the present invention.

With reference to the figures, the device for sharpening flexible cutting elements, particularly cutting chains of chainsaws and the like, generally designated by the reference numeral 1, comprises a supporting frame 2, to which a sharpening head, generally designated by the reference numeral 3, is connected, said head being constituted by a motor unit 4 that drives a grinding wheel 5.

The supporting frame 2 comprises a base body 6, which defines a lower portion that is flat in order to allow, if required, resting on a bench, and defines, in an upward region, a groove 7 in which it is possible to position a guiding blade 10 of a flexible cutting element, generally designated by the reference numeral 11, and constituted in the specific example by a cutting chain of chainsaws.

An important peculiarity of the invention consists in that the device is provided with means for mutual fixing between the supporting frame 2 and the blade 10, which in a preferred embodiment are constituted by a locking pivot 20, which is actuated by a locking knob 21 and acts against the guiding blade 10 to push it to lock against blade presser bars 22, which are arranged on the opposite side, so as to allow precise locking between the device and the tool whose flexible element is to be sharpened.

From a practical standpoint, it is possible to keep the supporting frame 2 fixed, by connecting thereto the chainsaw or otherwise the tool whose flexible element is to be sharpened, or optionally it is also possible to lock the tool or chainsaw and connect the device thereto.

For correct positioning, chain guiding jaws 30 are provided which are accommodated within the groove 7 and are provided with lugs 31 in order to be able to oscillate along a direction that is substantially parallel to the extension of the chain 11, so as to engage below the cutting chain 11 in order to retain it in position and guide it.

The chain guiding jaws 30 are retained in position by means of pusher knobs 35, which act on the jaws and fix them in position.

The sharpening head 3 is connected to an arm 40 with the possibility to rotate about a first actuation axis 41, substantially perpendicular to the plane of arrangement of the arm 40 which is mounted so that it can oscillate about a positioning axis, which is defined by a pivot 42 that allows to turn the sharpening assembly so as to position the grinding wheel 5 as a function of the leftward or rightward cutting edge and with the inclination that is deemed optimum.

The arm 40 is provided with means for retention in discrete positions, which are constituted by a positioning pin 44 connected to an angle adjustment device 45, which is slidingly guided on the arm in contrast with the action of a return spring 46, so as to make the pins 44 enter positioning holes 47 provided on the frame 2 in order to fix correctly the angular positioning of the grinding wheel.

Another peculiar feature of the device according to the invention consists in that means for the stepwise advancement of the flexible cutting element are provided which are actuated by the sharpening head in passing from the inactive position to the active position and vice versa.

In greater detail, such means are provided by a flexible element, constituted for example by a cable 50, which is connected to a tab 51 that protrudes from the sharpening head 3 radially with respect to the axis 41.

The cable 50 winds around a first guiding pulley 52, which is supported by the arm 40, and around an adjustment pulley 53, which is connected to an adjustment stem 54 that can be actuated by means of a chain advancement adjustment knob 55 that can be accessed outside the arm 40.

The cable 50 further extends between two positioning pulleys 56, which are arranged at the pivot 42 for the oscillation of the arm 40, so as to not affect the tension of the cable 50 according to the variation of the angle of the arm 40.

The cable 50 further winds around a second guiding pulley 57 and a third guiding pulley 58, downstream of which the cable engages a crossmember 60, which is provided on an end of fork-like levers 61 which are mounted so that they can oscillate and are connected, at the crossmember 60, to an actuation spring 62, which is connected in a fixed point and is arranged in practice as an extension of the cable 50.

The levers 61, at the end that lies opposite the one connected to the cable 50 define a fork-like portion or slot 63, which engages a bridge 70 guided slidingly on guiding rods 71, which extend substantially parallel to the longitudinal direction of the chain 11, at the region for locking the chain guiding blade to the device.

The bridge 70 supports a ratchet 75, which is pushed elastically and is provided with a ratchet adjustment device 76, which adjusts its stroke in contrast with elastic means and is designed to engage the teeth of the chain 11 to produce stepwise advancement, as described in greater detail hereinafter, and release with a ratchet-like passage over the teeth during the return step.

To complete the assembly, on the arm 40 there is a pivot 80 for locking the advancement of the chain, which is connected to a chain advancement locking knob 81 that can be accessed on the arm 40, said pivot 80 engaging the tab 51 to limit the stroke during the step of spacing the sharpening head from the chain.

On the opposite side, on the arm 40 there is a pivot 83 for adjusting the stroke of the sharpening disk, which is connected to a knob 84 for adjusting the stroke of the disk, which in practice limits the penetration stroke of the sharpening disk during the sharpening step.

Another peculiar feature of the device according to the invention consists in the that the motor 4 is supplied by means of an autonomous source, which can be constituted by a battery 90 that can be inserted detachably within the frame 2 and optionally can be recharged directly by means of a socket 91 formed on the supporting frame 2.

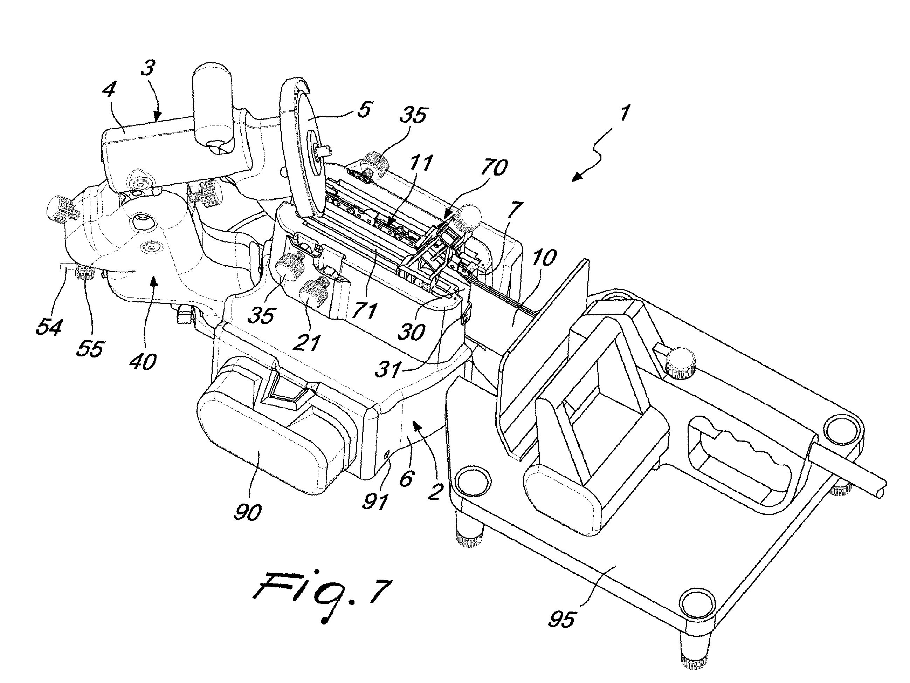

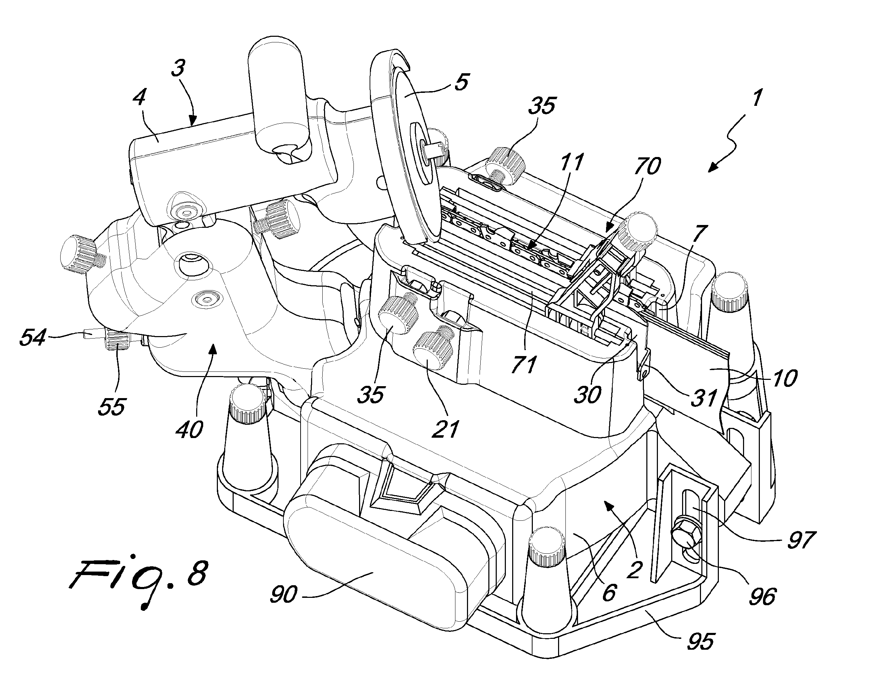

With reference to figures 7 and 8, the possibility of having a resting plane 95 is illustrated. The plane is pivoted to the supporting frame 2 by a connection pin 94 that is accomodated in an extended slot 97. This allows the possibility to arrange the plane 95 at the side of the supporting frame 2 to support the chainsaw and the like, during the sharpening operation, and the possibility to fold the plane 95 below the supporting frame 2, during non-use conditions.

In practical operation, in order to perform sharpening it is necessary to loosen beforehand the cutting chain 11 of the chainsaw in order to prepare it for the subsequent sharpening step.

After this preliminary operation, the guiding blade 10 is locked between the chain guiding jaws 30 and the guiding blade is locked by means of the locking knob 21.

The sharpening angle is then selected by taking advantage of the possibility of the arm 40 to oscillate about the pivot 42, adjusting the left side and the right side, and then the sharpening disk 5 is moved proximate to the tooth to be sharpened, adjusting the sharpening depth by acting on the disk stroke adjustment knob 84. Then, by means of the chain advancement locking knob 81, the ratchet pusher 75 is placed adjacent to the tooth that will subsequently be sharpened, and the positioning height of the ratchet is adjusted by means of the knob 76.

After lifting the sharpening disk above the tooth to be sharpened, the amount of sharpening is adjusted by acting on the chain advancement adjustment device by means of the knob 55, and then the disk is raised gradually in order to check the correct stroke, stopping when the tooth is aligned with the notch provided on the chain guiding jaws, subsequently proceeding with the actuation of the chain advancement block by means of the knob 81, which decides the opening stroke of the sharpening disk.

In practical operation, therefore, upon rotation of the sharpening head, during the spacing step, the mechanism constituted by the cable 50 that acts on the levers 61 produces the stepwise advancement of the cutting chain; during this step, the movement of the bridge 70 occurs by means of the spring 62, which previously had been loaded by the rotation of the sharpening head.

In order to perform sharpening, the step of approach of the grinding wheel to the chain is performed, and in this step the traction that is applied to the cable causes the return of the bridge 70, with ratchet-like engagement of the pusher on the chain and with loading of the spring 62, which prepares itself for a subsequent actuation.

From what has been described above it is evident that the invention achieves the proposed aim and objects, and in particular the fact is stressed that a device for sharpening flexible cutting elements, particularly cutting chains of chainsaws and the like of the portable type, is provided which allows to avoid disassembling the flexible cutting element from the tool and can also provide the automatic advancement of the flexible cutting element to be sharpened.

Another important aspect of the invention further consists in that the motor can be supplied with power by a rechargeable battery, which can be of the interchangeable type or optionally of the type that can be recharged directly inside the device.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application no. MI2007A002284, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for sharpening flexible cutting elements, particularly cutting chains of chainsaws and the like, comprising a frame (2) for supporting a sharpening head (3), **characterized in that** it comprises means for mutual fixing between said supporting frame (2) and a blade (10) for guiding a flexible cutting element (11), means for the stepwise advancement of said flexible cutting element (11) being further provided which are actuated by said sharpening head (3) in passing from an inactive position to an active position and vice versa.

2. The device according to claim 1, **characterized in that** said base body (6) defines a lower portion that is substantially flat in order to act as a resting element.

3. The device according to one or more of the preceding claims, **characterized in that** said base body (6) comprises a groove (7) for positioning said guiding blade (10) of a flexible cutting element (11).

4. The device according to one or more of the preceding claims, **characterized in that** said fixing means comprise a locking pivot (20), which can be actuated by a locking knob (21) and acts against said guiding blade (10) in order to push it so as to lock against blade pressing bars (22) arranged on the opposite side of said guiding blade (10).

5. The device according to one or more of the preceding claims, **characterized in that** it comprises chain guiding jaws (30), which are accommodated within said groove (7) and are mounted so as to oscillate for engagement below said flexible cutting element (11).

6. The device according to one or more of the preceding claims, **characterized in that** said jaws (30) are provided with lugs (31) for pivoting along directions that are substantially parallel to the extension of said flexible element, pusher knobs (35), which act against said jaws (30) being further provided.

7. The device according to one or more of the preceding claims,
**characterized in that** said sharpening head (3) is supported by an arm (40) so that it can oscillate about a first actuation axis (41) substantially perpendicular to the plane of arrangement of said arm (40).

8. The device according to one or more of the preceding claims, **characterized in that** said base body (6) comprises a pivot (42) that defines a positioning axis that lies on a plane that is substantially parallel to the plane of arrangement of said guiding blade (10), said arm that supports said sharpening head (3) being able to oscillate about said positioning axis.

9. The device according to one or more of the preceding claims, **characterized in that** it comprises, on said arm (40), means for retaining in discrete positions a positioning pin (44) that is connected to an angle adjustment device (45), said positioning pin (44) being engageable within corresponding positioning holes (47) provided in said base body (6).

10. The device according to one or more of the preceding claims, **characterized in that** said stepwise advancement means comprise a flexible element (50), which is connected to a tab (51) that protrudes from said sharpening head (3) radially with respect to said first actuation axis (41) of said sharpening head (3), said flexible element (50) acting at the end of fork-shaped levers (61) which are associated with a bridge (70) that is slidingly guided on guiding rods (71) that extend substantially parallel to the longitudinal extension of said flexible cutting element (11) at the locking region of said guiding blade (10), said bridge (70) supporting a ratchet (75) that can engage the teeth of said flexible cutting element (11) in order to push it in stepwise advancement and disengage from said teeth during the return step.

11. The device according to one or more of the preceding claims, **characterized in that** it comprises, for said flexible element (50), a first guiding pulley (52) supported by said arm (40), an adjustment pulley (53) connected to an adjustment stem, and positioning pulleys (56) at said pin (42), a second guiding pulley (57) and a third guiding pulley (58) being further provided which are arranged upstream with respect to a crossmember (60) for the connection of said flexible element (50) which is supported by said levers (61), an actuation spring (62) being further provided which is connected to said crossmember (60) and is connected to a fixed point at the other end.

12. The device according to one or more of the preceding claims, **characterized in that** it comprises, on said arm (40), a chain advancement locking pin (80), which is connected to a chain advancement locking knob (81) in order to limit the stroke during the step of spacing of the sharpening head (3) from said flexible cutting element (11).

13. The device according to one or more of the preceding claims, **characterized in that** it comprises, on said arm (40), a pivot (83) for the adjustment of the stroke of the sharpening disk that is connected to a knob (84) for adjusting the stroke of the disk in order to limit the penetration stroke of the sharpening disk during the sharpening step.

14. The device according to one or more of the preceding claims, **characterized in that** it comprises an independent electric power source (90) for supplying power to the motor (4) of said sharpening head (3).

15. The device according to one or more of the preceding claims, **characterized in that** it comprises a resting plane (95) pivoted to the supporting frame (2) for its positioning at the side of said supporting frame (2) during use conditions, and below said supporting frame (2), during non-use conditions.
